# EUROPÄISCHE PATENTANMELDUNG

(11) **EP 0 947 154 A1**
(43) Veröffentlichungstag der Anmeldung: **06.10.1999**
(21) Anmeldenummer: 99103637.7
(22) Anmeldetag: 25.02.1999
(51) Int. Cl.: A47J 31/08

(54) **Filterpapiereinsatz für ein Filtergefäss**

(30) Priorität: 30.03.1998 DE 29805673 U
(71) Anmelder: MELITTA HAUSHALTSPRODUKTE GmbH & Co. Kommanditgesellschaft, D-32427 Minden (DE)
(72) Erfinder: Stratmann, Harald, 32369 Rahden (DE); Olthaus, Hans, 32425 Minden (DE); Frank, Stephan, 32357 Porta Westfalica (DE); Wittenschläger, Lutz, Dr., 32479 Hille (DE); Dölfel, Rainer, Dr., 32457 Porta Westfalica (DE)
(74) Vertreter: Stracke, Alexander, Dipl.-Ing.

(57) **Zusammenfassung**

Es wird ein Filterpapiereinsatz (1) für ein Filtergefäß zur Herstellung von Brühgetränken wie Kaffee oder Tee beschrieben, welcher sich dadurch auszeichnet, daß er mindestens mit einer allseitig geschlossenen und mit einem Aromaträger gefüllten Hohlkammer (9) versehen ist.
Mit einem derartigen Filterpapiereinsatz (1) kann auf einfachste Art und Weise ein aromatisiertes Brühgetränk wie z. B. Kaffee oder Tee hergestellt werden. Entsprechend dem jeweiligen Geschmack können beim erfindungsgmäßen Filterpapiereinsatz (1) die unterschiedlichsten Aromen mitgegeben werden. Viele Kaffeetrinker lieben es z.B., dem Kaffee Amaretto, Eierlikör, Rum, Cognac oder dergleichen zuzugeben, um einen bestimmten Geschmackseffekt zu erzielen. Entsprechende Aromastoffe können dem erfindungsgemäßen Filterpapiereinsatz (1) ohne weiteres zugegeben werden, so daß schon nach Herstellung des Brühgetränkes selbst die entsprechende Geschmacksrichtung gegeben ist, wobei in vielen Fällen auch noch der Vorteil erzielbar ist, daß das Brühgetränk selbst vollkommen alkoholfrei ist.

## Beschreibung

Die vorliegende Erfindung betrifft einen Filterpapiereinsatz für ein Filtergefäß zur Herstellung von Brühgetränken wie Kaffee oder Tee.

Filterpapiereinsätze der gattungsgemäßen Art sind in vielerlei Ausführungsformen bekannt.

Die Gestaltung derartiger Filterpapiereinsätze ist im wesentlichen vom jeweiligen Einsatzzweck abhängig, d. h., daß ein Filterpapiereinsatz jeweils der Form des verwendeten Filtergefäßes angepaßt ist.

Die bekanntesten Filterpapiereinsätze sind tütenartig ausgebildet und weisen etwa einen kegelstumpfartigen Grundriß auf. Dabei sind zwei übereinander liegende Filterpapier-Lagen über eine gemeinsame Faltkante miteinander verbunden und im Bereich einer Bodenkante und einer der Faltkante gegenüberliegenden weiteren Seitenkante vorzugsweise durch Prägenähte miteinander fest verbunden.

Es sind auch Filterpapiereinsätze ohne Nahtstellen bekannt, beispielsweise blattförmige Filterpapiereinsätze für entsprechend gestaltete Filtergefäße, z. B. für sogenannte Rundfilter. Weiterhin sind Filterpapiereinsätze in mehrfach gefalteter Form bekannt, wobei aus einem einlagigen Zuschnitt durch entsprechende Faltungen eine gefäßartige Form geschaffen werden kann, die dem jeweiligen, zum Einsatz gelangenden Filtergefäß entspricht.

Bislang haben Filterpapiereinsätze der gattungsgemäßen Art ausschließlich die Aufgabe, gemahlenen Kaffee oder Tee aufzunehmen, aus dem dann durch Überbrühen mit Heißwasser ein entsprechendes Brühgetränk im Filtrierverfahren hergestellt wird.

Der vorliegenden Erfindung liegt die Aufgabe zugrunde, einen Filterpapiereinsatz der gattungsgemäßen Art zu schaffen, mit dessen Hilfe auf einfache Art und Weise ein Brühgetränk wie z. B. Kaffee oder Tee zusätzlich aromatisiert werden kann.

Diese Aufgabe wird erfindungsgemäß dadurch gelöst, daß der Filterpapiereinsatz mit mindestens einer allseitig geschlossenen und mit einem Aromaträger gefüllten Hohlkammer versehen ist.

Mit einem derartigen Filterpapiereinsatz kann auf einfachste Art und Weise ein aromatisiertes Brühgetränk wie z. B. Kaffee oder Tee hergestellt werden.

Entsprechend dem jeweiligen Geschmack können einem erfindungsgemäßen Filterpapiereinsatz die unterschiedlichsten Aromen mitgegeben werden. Viele Kaffeetrinker lieben es z. B., dem Kaffee Amaretto, Eierlikör, Rum, Cognac oder dergleichen zuzugeben, um einen bestimmten Geschmackseffekt zu erzielen. Entsprechende Aromastoffe können einem erfindungsgemäßen Filterpapiereinsatz ohne weiteres zugegeben werden, so daß schon nach Herstellen des Brühgetränkes selbst die entsprechende Geschmacksrichtung gegeben ist.

In vielen Fällen wird dabei auch noch der Vorteil erzielt, daß das Brühgetränk vollkommen alkoholfrei ist, im Gegensatz zu solchen Brühgetränken, denen echte, alkoholische Getränke beigemischt werden.

Nach einer Weiterbildung der Erfindung ist vorgesehen, daß in die Hohlkammer ein Aromaträger in Form eines trockenen, wasserlöslichen Pulvers eingefüllt ist,

Eine andere Möglichkeit besteht darin, einen Aromaträger in Form eines trockenen, in Tablettenform gepreßten Pulvers zu verwenden.

Ebenso ist es denkbar, einen flüssigen Aromaträger zu verwenden, der selbst in einem wasserlöslichen Beutel abgefüllt ist und gemeinsam mit diesem Beutel in eine Hohlkammer eines erfindungsgemäßen Filterpapiereinsatzes eingesetzt ist. In diesem Falle ist selbstverständlich darauf zu achten, daß die Umhüllung des flüssigen Aromaträgers aus einem lebensmittelunbedenklichen Material besteht.

Weitere Merkmale der Erfindung sind Gegenstand weiterer Unteransprüche.

In den beigefügten Zeichnungen sind Ausführungsbeispiele der Erfindung dargestellt, die im folgenden näher beschrieben werden.

Es zeigen:
- Figur 1: Eine Ansicht eines flach liegenden Filterpapiereinsatzes gemäß vorliegender Erfindung,
- Figur 2: einen Teilschnitt nach der Linie II-II in Figur 1,
- Fig. 3-5: Ansichten von flach liegenden Filterpapiereinsätzen nach weiteren Ausführungsbeispielen der Erfindung.

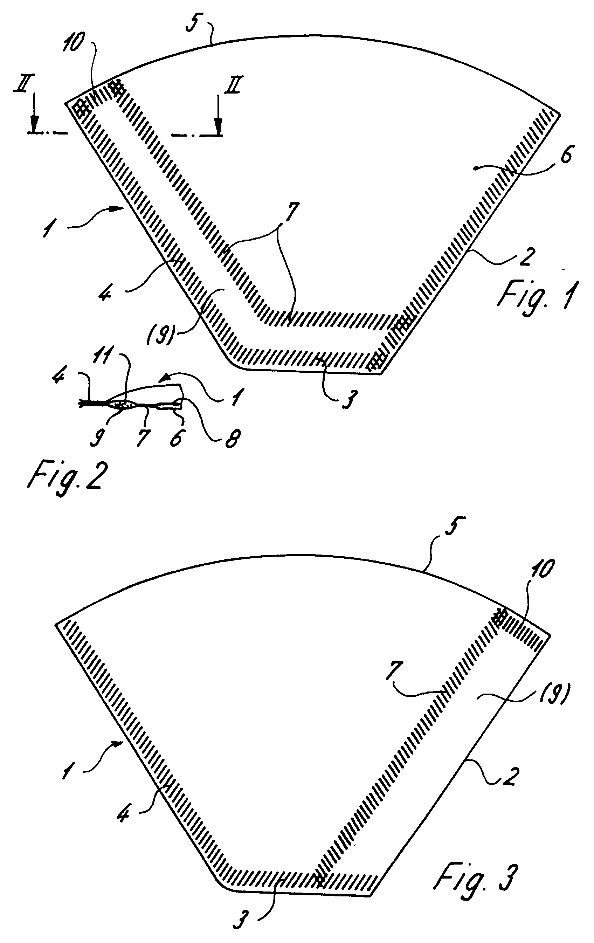

In Figur 1 ist ein Filterpapiereinsatz 1 für ein Filtergefäß zur Herstellung von Brühgetränken wie Kaffee oder Tee gezeigt, der im flachliegenden Zustand eine etwa kegelstumpfartige Grundfläche aufweist und in an sich bekannter Weise eine Faltkante 2, eine Bodennaht 3 und eine Seitennaht 4 aufweist.

Die der Bodennaht 3 gegenüberliegende obere Kante 5 des Filterpapiereinsatzes 1 ist die Einfüllöffnung, die es ermöglicht, nach dem Einbringen des Filterpapiereinsatzes 1 in ein entsprechend kegelstumpfartiges Filtergefäß gemahlenen Kaffee oder Tee in den Filterpapiereinsatz 1 einzufüllen.

Auf die Sichtfläche des Filterpapiereinsatzes 1 gemäß Figur 1 ist eine zusätzliche Filterpapier-Lage 6 aufgebracht. Diese zusätzliche Filterpapier-Lage 6 ist mit dem Filterpapiereinsatz 1 im übrigen sowohl im Bereich der Bodennaht 3 wie auch der Seitennaht 4 und darüber hinaus im Bereich der Seitenkante 2 durch Prägenähte verbunden, wobei diese Prägenähte in einem Arbeitsgang mit dem Herstellen der ohnehin notwendigen Bodennaht 3 und der ebenfalls notwendigen Seitennaht 4 durchgeführt werden.

In einem gewissen Abstand zu der Bodennaht 3 und der Seitennaht 4 sind zusätzliche Prägenähte 7 angebracht, wobei diese Prägenähte 7 lediglich die zusätzliche Filterpapier-Lage 6 mit der unmittelbar gegenüberliegenden Seitenwand 8 des Filterpapiereinsatzes 1 verbinden. Dies geht aus Figur 2 sehr anschaulich hervor.

Durch diese zusätzlichen Prägenähte 7 wird eine kanalartige Hohlkammer 9 begrenzt, die im Berich der oberen Kante 5 durch eine zusätztliche Prägenaht 10 verschlossen ist. In diese Hohlkammer 9 ist ein Aromaträger 11 eingefüllt, und zwar vorzugsweise in Form eines trockenen, wasserlöslichen Pulvers. Dieser Aromaträger 11 wird beim Herstellen eines Brühgetränkes durch das heiße Wasser weitestgehend aufgelöst und gibt seine Aromastoffe an das hergestellt Brühgetränk, z. B. Kaffee oder Tee, ab. Es wird damit insgesamt ein Kaffee oder ein Tee mit einem zusätzlichen Aromaeffekt erzielt.

Beim Ausführungsbeispiel gemäß den Figuren 1 und 2 ist die kanalartige Hohlkammer 9 zur Aufnahme eines Aromaträgers 11 durch eine zusätzliche Filterpapier-Lage 6 und durch entsprechende zusätzliche Nähte 7 und 10 gebildet.

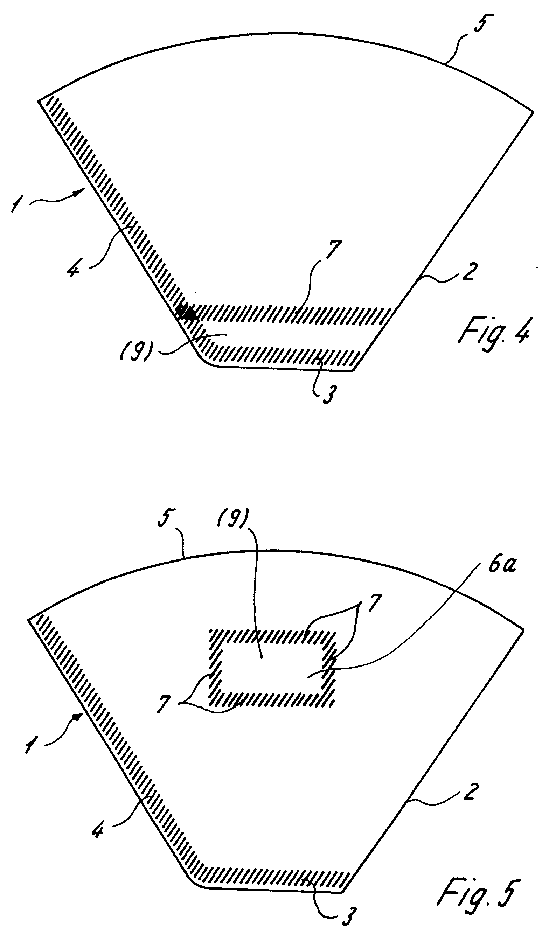

Bei den Ausführungsbeispielen nach den Figuren 3 und 4 ist eine entsprechende Hohlkammer 9 durch die unmittelbare Verbindung der übereinander liegenden Filter-papier-Lagen des Filterpapiereinsatzes 1 durch zusätzliche Prägenähte 7 und 10 geschaffen. Beim Ausführungsbeispiel gemäß Figur 3 verläuft diese zusätzliche Prägenaht 7 beispielsweise parallel zur seitlichen Faltkante 2 und die in dieser Art gebildete Hohlkammer 9 ist durch eine im Bereich der oberen Kante 5 des Filterpapiereinsatzes 1 vorgesehene weitere Prägenaht 10 verschlossen. Auch hier nimmt die Hohlkammer 9 einen Aromaträger auf.

Beim Ausführungsbeispiel nach Figur 4 verläuft die zusätzliche Prägenaht 7 etwa parallel zur Bodennaht 3, so daß in diesem Falle eine Hohlkammer 9 im Bodenbereich des Filterpapiereinsatzes 1 zur Aufnahme eines Aromaträgers geschaffen ist.

Figur 5 zeigt die Möglichkeit, eine Hohlkammer 9 zur Aufnahme eines Aromaträgers dadurch zu schaffen, daß auf einen Teilbereich des Filterpapiereinsatzes 1 eine beispielsweise rechteckig begrenzte, zusätzliche Filterpapier-Lage 6a aufgebracht und durch Prägenähte 7 mit der unmittelbar gegenüberliegenden Seitenwand des Filterpapiereinsatzes 1 verbunden ist.

Die dargestellten Ausführungsbeispiele sollen nur stellvertretend deutlich machen, daß vielfältige Möglichkeiten bestehen, einen Filterpapiereinsatz 1 mit einer Hohlkammer 9 zur Aufnahme eines Aromaträgers auszustatten.

Es sei an dieser Stelle auch ausdrücklich darauf hingewiesen, daß auch bei einlagigen Filterpapiereinsätzen, z. B. bei sogenannten Rundefilterblättern, zusätzliche Hohlkammern zur Aufnahme von Aromaträgern geschaffen werden können durch Aufbringen einer zusätzlichen Filterpapier-Lage, die mit dem eigentlichen Rundfilterblatt durch Prägenähte oder andere Verbindungstechniken fest verbunden wird.

Ob in die jeweils vorbereitete Hohlkammer 9 ein pulverförmiger, tablettenförmiger oder flüssiger Aromaträger eingebracht wird, ist für das erzielte Geschmacksergebnis von untergeordneter Bedeutung. Es kann allerdings in Abhängigkeit von den Eigenschaften des verwendeten Aromaträgers vorteilhaft sein, sich für die eine oder andere der angegebenen Möglichkeiten zu entscheiden.

Bei Bedarf kann ein Filterpapiereinsatz auch mit mehreren Hohlkammern 9 zur Aufnahme von Aromaträgern ausgestattet sein.

## Patentansprüche

1. Filterpapiereinsatz für ein Filtergefäß zur Herstellung von Brühgetränken wie Kaffee oder Tee, **dadurch gekennzeichnet, daß** der Filterpapiereinsatz (1) mit mindestens einer allseitig geschlossenen und mit einem Aromaträger (11) gefüllten Hohlkammer (9) versehen ist.

2. Filterpapiereinsatz nach Anspruch 1, **dadurch gekennzeichnet, daß** in die Hohlkammer (9) ein Aromaträger (11) in Form eines trockenen, wasserlöslichen Pulvers eingefüllt ist.

3. Filterpapiereinsatz nach Anspruch 1, **dadurch gekennzeichnet, daß** der Aromaträger (11) ein trockenes, in Tablettenform gepreßtes Pulver ist.

4. Filterpapiereinsatz nach Anspruch 1, **dadurch gekennzeichnet, daß** in die Hohlkammer (9) ein flüssiger Aromaträger eingebracht ist, der seinerseits von einer vollständig geschlossenen, wasserlöslichen und lebensmittelunbedenklichen Umhüllung aufgenommen ist.

5. Filterpapiereinsatz nach einem oder mehreren der vorhergehenden Ansprüche, **dadurch gekennzeichnet, daß** die Hohlkammer (9) bzw. die Hohlkammern (9) durch eine bereichsweise mit dem Filterpapiereinsatz (1) durch Prägenähte (7, 10) oder dergleichen verbundene, zusätzliche Filterpapier-Lage (6) und die jeweils gegenüberliegende Materiallage des Filterpapiereinsatzes (1) selbst gebildet ist bzw. sind.

6. Filterpapiereinsatz nach einem oder mehreren der vorhergehenden Ansprüche, **dadurch gekennzeichnet, daß** die Hohlkammer (9) parallel zu einer Seitenkante (2, 4) und/oder der Bodennaht (3) des Filterpapiereinsatzes (1) verläuft.

7. Filterpapiereinsatz nach einem oder mehreren der vorhergehenden Ansprüche, **dadurch gekennzeichnet, daß** die Hohlkammer (9) bei einem einlagigen Filterpapiereinsatz wie z.B. bei einem Rundfilterblatt durch eine vollumfänglich mit dem einlagigen Filterpapiereinsatz verbundene, zusätzliche Filterpapier-Lage gebildet ist.
